# EUROPÄISCHE PATENTSCHRIFT

(11) **EP 1 961 878 B1**
(45) Veröffentlichungstag und Bekanntmachung des Hinweises auf die Patenterteilung: **07.07.2010**
(21) Anmeldenummer: 07003681.9
(22) Anmeldetag: 22.02.2007
(51) Int. Cl.: E03F 5/02, E02D 29/12, H02G 9/10

(54) **Schachtring**
Manhole ring
Anneau de puits

(43) Veröffentlichungstag der Anmeldung: 27.08.2008
(73) Patentinhaber: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(56) Entgegenhaltungen:
- DE-A1-102005 012 146
- US-A1- 2006 042 174

## Beschreibung

Die Erfindung betrifft einen Schachtring gemäß Oberbegriff des Patentanspruchs 1.

Aus US 2006/0042174 A ist ein Schachtring für eine Pumpenstation bekannt, dessen Außenwand eine regelmäßige Viereck-Wabenstruktur aus den Versteifungsrippen aufweist. Kreisrunde Rohranschlussbereiche sind in die Viereck-Wabenstruktur so eingegliedert, dass die runde Umfangswand des Rohranschlusses die Wabenstruktur auflöst.

Aus DE 41 22 299 A bekannte Schachtringe weisen an der Außenseite der Ringwand zwischen den Ringenden senkrecht und geradlinig durchgehende Versteifungsrippen auf, zwischen denen Anschlussbereiche für Rohre definiert sind. Die Anschlussbereiche sind rund und können in der konischen, d.h. gewölbten Ringwand oder in vorgeformten Flachstellen gewählt werden. Bereits aus nur einem Schachtring lässt sich ein Schacht erstellen, indem der Schachtring beispielsweise mit einem untenliegenden Gerinne- oder Bodenteil und einem obenliegenden Aufsatzteil kombiniert wird. Häufig werden jedoch mehrere solcher Schachtringe zu einem Schachtkörper zusammengesetzt. In der Abwassertechnik kommt es bei im Erdreich installierten Schächten zu Druckkräften von außen und/oder je nach Füllstand zu Druckkräften von innen nach außen. In der Kabeltechnik treten vorwiegend Druckkräfte vom umgebenden Erdreich nach innen auf. Deshalb benötigen die Schachtringe eine möglichst hohe Ringsteifigkeit, die einerseits über die Wandstärke und die Schachtringquerschnittsform, andererseits aber auch über die Versteifungsrippen definiert wird. Ein weiterer wichtiger Anforderungsgesichtspunkt an solche Schachtringe besteht darin, meist runde Anschlussbereiche wählen zu können, um Rohre großer Nennweiten anschließen zu können. Um die Ringsteifigkeit zu steigern, werden die axialen Versteifungsrippen relativ dicht aneinandergesetzt, was jedoch die Größe der runden Anschlussbereiche unzweckmäßig verkleinert. Werden hingegen die Anschlussbereiche so groß wie möglich gebildet, leidet die Ringsteifigkeit. Dies ist auch der Fall, wenn axiale Versteifungsrippen gitterartig mit in Umfangsrichtung verlaufenden Versteifungsrippen kombiniert werden und rechteckige oder quadratische Felder für den Anschluss vorhanden sind. Es ist also jeweils ein unbefriedigender Kompromiss zwischen der erzielbaren Ringsteifigkeit und der Größe der Anschlussbereiche zu finden.

Aus DE 199 61 414 A ist ein aus Kunststoff nach einem Rotationsgussverfahren hergestellter Schacht bekannt, dessen Schachtringkörper einstückig mit einem nach unten bombierten Schachtboden vereinigt ist. Der Schachtboden ohne Anschlussbereiche kann unterseitig eine Verrippung mit dicht beieinander platzierten Versteifungsrippen aufweisen. Der Schachtringkörper selbst ist nur mit in Umfangsrichtung verlaufenden Versteifungsrippen versehen, wobei in versteifungsrippenfreien Abschnitten der Ringwand runde Anschlussbereiche für Rohre oder Einsatzteile geformt werden. Ferner geht der Ringteil in einem konischen Oberteil mit axialen Versteifungsrippen in das obere Ringende über, in das ein Aufsatzteil eingesteckt ist, dessen Ringsteifigkeit erneut durch innere, in Umfangsrichtung verlaufende Versteifungsrippen erhöht ist. Dank des integrierten Schachtbodens, des konischen Oberteils und der in Umfangsrichtung verlaufenden Versteifungsrippen wird hier die erforderliche Ringsteifigkeit erzielt. Jedoch sind im Schachtringkörper zwischen den in Umfangsrichtung verlaufenden Versteifungsrippen keine ausreichend großen Anschlussbereiche möglich.

Aus DE 10 2005 012 146 A ist ein gattungsfremder abwassertechnischer Rinnenkörper aus Kunststoff bekannt, der in einem Entwässerungsrinnensystem mit einem oben installierten Rost und einem innen in den Rinnenkörper eingebauten Oberflächenverkleidungselement kombiniert wird. Der Rinnenkörper weist eine in der Einbaulage nach unten gerichtete Sechseck-Wabenstruktur mit unregelmäßigen Formen und gemischten Größen auf. Bodenseitige Anschlussöffnungen zum Anschließen eines Ableitungsrohres sind als in Sollbruchstellen heraustrennbare Wandungsbereiche des Bodens des Rinnenkörpers in die Wabenstruktur so eingegliedert, dass sie die Wabenstruktur unterbrechen und bogenförmige Wabenbegrenzungswandabschnitte definieren.

Der Erfindung liegt die Aufgabe zugrunde, einen Schachtring der eingangs genannten Art anzugeben, bei dem ein optimaler Kompromiss zwischen der Ringsteifigkeit und der Größe von Anschlussbereichen gegeben ist.

Die gestellte Aufgabe wird mit den Merkmalen des Patentanspruchs 1 gelöst.

Die regelmäßige Sechseck-Wabenstruktur resultiert in einer höheren Ringsteifigkeit des Schachtrings als axiale und/oder in Umfangsrichtung verlaufende Versteifungsrippen. Ferner ist dank der Sechseckform die Größe der Anschlussbereiche, die runde Durchgänge und mit Abstand von den Versteifungsrippen in die Wabenstruktur eingeschriebene Kreise sind, optimal. Auf diese Weise wird ein optimaler Kompromiss zwischen der Ringsteifigkeit und der nutzbaren Größe der Anschlussbereiche erzielt, weil die vollständige Sechseck-Wabenstruktur eine von der Natur kopierte optimale Versteifung ergibt und der Rundheit der Durchgänge im jeweiligen Anschlussbereich besser angepasst ist als Vierecke.

Bei einer zweckmäßigen Ausführungsform enthält die Wabenstruktur zumindest eine in Umfangsrichtung geschlossene Reihe vollständiger Waben, wobei zwischen den Verbindungsbereichen und dieser Reihe nur Teilwaben vorgesehen sein können. Die Reihe der vollständigen Waben verläuft vorzugsweise parallel zu den Ringenden. In dieser Reihe ist das Verhältnis zwischen der Ringsteifigkeit und der Größe der möglichen Anschlussbereiche am günstigsten.

Bei einer zweckmäßigen Ausführungsform sind zusätzlich in Umfangsrichtung mehrere zu den Ringenden senkrechte, zwischen den Verbindungsbereichen gerade durchgehende Versteifungsrippen vorgesehen, in denen dazu parallelen Wabenstreben enthalten sind.

Zweckmäßig sind die durchgehenden Versteifungsrippen auf Kupplungselemente in den Verbindungsbereichen ausgerichtet oder sogar mit diesen verbunden. Durch die zusätzlichen Versteifungsrippen wird die Ringsteifigkeit lokal erhöht und werden für die Kupplungselemente integrierte Kraftübertragungsbereiche im Schachtring gebildet.

Besonders zweckmäßig nimmt die Höhe der Versteifungsrippen zur Außentaille des Schachtrings allmählich zu, um im Taillenbereich eine besonders hohe Ringsteifigkeit zu erzielen.

Die Höhe der zusätzlichen durchgehenden axialen Versteifungsrippen nimmt zweckmäßig lokal zu den Verbindungsbereichen hin stark zu, um dort lokale Verstärkungen zu bilden.

Bei einer zweckmäßigen Ausführungsform weist die Ringwand in zumindest einer Wabe bzw. einer Teilwabe für einen Anschlussbereich eine eingeformte Flachstelle auf, in der der gekrümmte Verlauf der Ringwand lokal aufgegeben ist. Eine solche Flachstelle ist speziell für einen Verbindungsbereich günstig, in welchem eine verschraubte Ringhalterung installiert wird, mit der in einem gewölbten Ringwandbereich die Dichtigkeit nur schwierig zu erzielen wäre.

Bei einer anderen Ausführungsform ist in einem Anschlussbereich ein runder Durchgang geformt, in welchem über eine eingeknüpfte Elastomerdichtung ein Rohr gehaltert ist. Die Elastomerdichtung kann in diesem Anschlussbereich die Wölbung der Ringwand kompensieren und dennoch die erforderliche Dichtigkeit erbringen.

In einer anderen Ausführungsform ist in einem als eingeformte Flachstelle gebildeten Anschlussbereich ein runder Durchgang geformt, in welchem über eine Schraubhalterung mit Dichtung ein Rohr gehaltert ist. Hier lässt sich eine baulich einfache Schraubhalterung verwenden, die die notwendige Dichtigkeit erbringt.

Bei einer zweckmäßigen Ausführungsform beträgt die lichte Wabenweite etwa 15 bis 30 % des Schachtring-Durchmessers. Mit dieser Dimensionierung wird ein Optimum zwischen der Ringsteifigkeit und der Größe der möglichen Anschlussbereiche erzielt. In kabeltechnischen Einsatzfällen könnte die lichte Wabenweite auch weitaus geringer gewählt werden, da dort die anzuschließenden Rohre häufig kleinere Nennweiten haben, als bei abwassertechnischen Einsatzfällen.

Zweckmäßig sind die Kupplungselemente eingeformte Keilnasen und Keilnasen-Aufnahmeböcke, die sich über Kerbspannstifte in Durchstecklöchern rasch, bequem und dauerhaft haltbar verbinden lassen.

Der Schachtring ist zweckmäßig ein Spritzgussteil oder Rotationsgussteil aus HDPE, PP, oder ähnlichen, für die jeweiligen Einsatzfälle passenden Kunststoffmaterialien. Die Sechskant-Wabenstruktur lässt sich formentechnisch einfach realisieren.

Anhand der Zeichnungen werden Ausführungsformen des Erfindungsgegenstandes erläutert. Es zeigen:
- Fig. 1: eine Perspektivansicht eines Schachtrings,
- Fig. 2: eine Perspektivansicht des Schachtrings von Fig. 1, mit in Anschlussbereichen installierten Rohren,
- Fig. 3: eine Perspektivansicht eines aus drei Schachtringen zusammengesetzten Schachts, und
- Fig. 4: eine Perspektivansicht in größerem Maßstab der Verbindung zweier Schachtringe, beispielsweise in dem Schacht von Fig. 3.

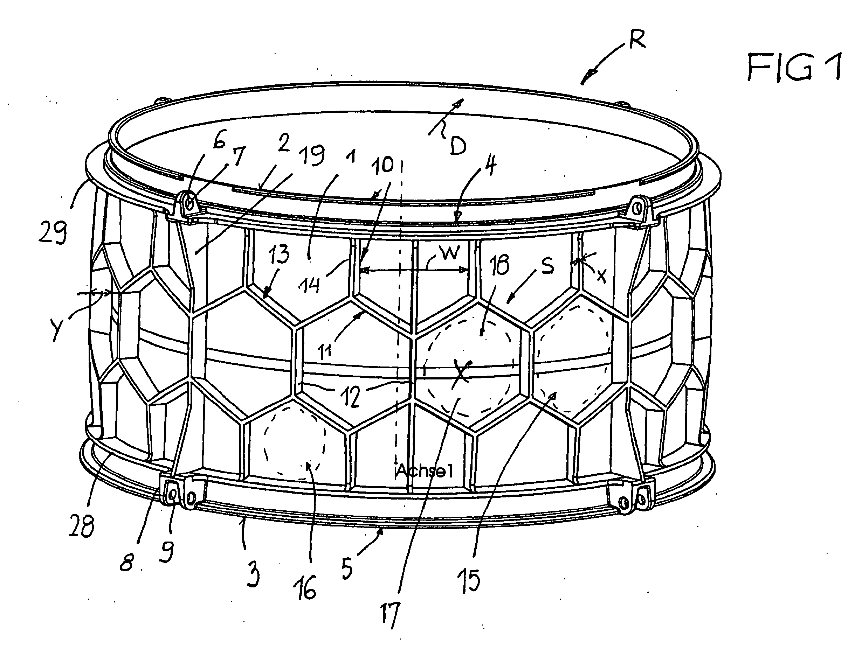

Ein als Kunststoffspritzgussteil oder Rotationsgussteil ausgebildeter Schachtring R in Fig. 1 ist im Wesentlichen zylindrisch mit einem Durchmesser D ausgebildet, der z. B. in etwa dem doppelten der axialen Höhe des Schachtrings entspricht. Das Material des Schachtrings R ist beispielsweise HDPE oder PP. Der Schachtring R besitzt zueinander im Wesentlichen parallele Ringenden 2, 3, zwischen denen sich die im Grundzug zylindrische Ringwand 1 erstreckt. Alternativ (nicht gezeigt) könnte der Schachtring auch konische Gestalt haben.

Am oberen Ringende 2 ist ein Verbindungsbereich 4 zur Verbindung mit einem gleichartigen Schachtring R oder einer anderen, nicht gezeigten Schachtkomponente geformt, und zwar im Anschluss an einen in Umfangsrichtung durchgehenden Randflansch 29 ein inneres Einsteckende, auf dem sich ein nicht gezeigtes Dichtungselement platzieren lässt. Am unteren Ringende 3 ist ein Verbindungsbereich 5 zum Verbinden mit einem weiteren gleichartigen Schachtring R (dort dessen Verbindungsbereich 4) oder einer nicht gezeigten, anderen Schachtkomponente angeformt, und zwar angrenzend an einen in Umfangsrichtung durchgehenden Randflansch 28. Im Verbindungsbereich 4 sind mehrere in Umfangsrichtung verteilte Kupplungselemente 6, hier Keilnasen, mit dem Randflansch 29 vereinigt, wobei die Keilnasen in etwa senkrecht zum Ringende 2 orientiert sind und Durchstecköffnungen 7 besitzen. In ähnlicher Weise sind im Verbindungsbereich 5 mehrere in Umfangsrichtung verteilte, mit dem Randflansch 28 vereinigte Keilnasen-Aufnahmeböcke als Kupplungselemente 8 eingeformt, die in axialer Richtung des Schachtrings R auf die Kupplungselemente 6 ausgerichtet sind und Durchstecköffnungen 9 besitzen.

An der Außenseite der Ringwand 1 sind Versteifungsrippen 10 geformt, die als Stege in etwa radial zur Achse des Schachtrings R orientiert sind und entweder im Wesentlichen eine gleichbleibende Steghöhe y oder zur Außentaille des Schachtrings R allmählich zunehmende Steghöhen 4 haben. Im letzteren Fall ist der Schachtring R, wie gezeigt, etwas nach außen bombiert. Die Versteifungsrippen 10 sind in einer Sechseck-Wabenstruktur S konfiguriert, die entlang der Taille des Schachtrings R zumindest eine in Umfangsrichtung geschlossene Reihe vollständiger Sechseck-Waben 11 enthält, die mit oberen und unteren Reihen von Sechseck-Teilwaben 13 verbunden sind. Jede Wabe 11 bzw. Teilwabe 13 besitzt einen senkrecht zu den Ringenden 2, 3 orientierten Wabensteg 12 bzw. 14. Die Sechsecke sind regelmäßige Sechsecke. Im Bereich der Kupplungselemente 6, 8 sind zusätzlich über die gesamte Höhe des Schachtrings R durchgehende, gerade verlaufende Versteifungsrippen 19 angeformt, deren Höhe jeweils zu jedem Verbindungsbereich 4, 5 zunimmt. Die Stegstärke x kann durchgehend in etwa gleichförmig sein.

In den Versteifungsrippen 19 ist beispielsweise jeweils ein Wabensteg 12 der vollständigen Waben 11 enthalten, während einige der Teilwaben 13 durch die zusätzlichen Versteifungsrippen 19 hälftig geteilt sind.

In zumindest einer der vollständigen Waben 11 ist ein kreisrunder Anschlussbereich 15 vorbestimmt, der ein weitestgehend in das Sechseck eingeschriebener Kreis in der gewölbten Ringwand 1 ist. Auch in den Teilwaben 13 können kreisrunde vorbestimmte Anschlussbereiche 16 definiert sein. Schließlich können in vollständigen Waben 11 und/oder Teilwaben 13 auch kreisrunde Anschlussbereiche 17 vorbestimmt sein, die dann in einer in der Wabe 11 bzw. Teilwabe 13 geformten (nicht gezeigten) Flachstelle der Ringwand vorgesehen sind.

Der Schachtring R in Fig. 1 kann entweder mit weiteren Schachtringen kombiniert zu einem Schacht ergänzt sein, oder mit weiteren Schachtkomponenten, wie einem Bodenteil und einem Aufsatzteil, selbst als Schacht dienen.

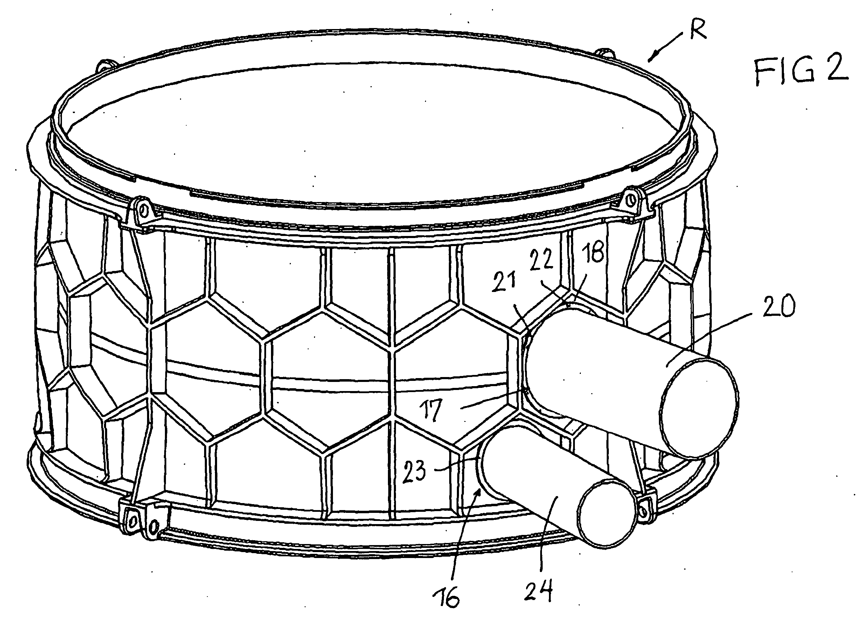

In Fig. 2 ist der Schachtring R von Fig. 1 für den jeweiligen Einsatzzweck ergänzt durch Rohre 24 und 20 unterschiedlicher Nennweiten. Das kleinere Rohr 24 ist beispielsweise in einem Anschlussbereich 16 abgedichtet gehaltert, und zwar durch eine Elastomerdichtung 23, die in einen in den Anschlussbereich 16 eingeschnittenen, runden Durchgang eingeknüpft ist. Das Rohr 20 hat eine größere Nennweite und ist beispielsweise in einem Anschlussbereich 17 montiert, der als eingeformte Flachstelle 18 in einer vollständigen Wabe ausgebildet ist. Auch in diesem Bereich ist ein runder Durchgang geformt, z.B. mit einem Zirkelschneider, und ist dann in der Flachstelle eine Ringhalterung 21 mit Schrauben 22 festgeklemmt, die das Rohr 20 abgedichtet haltert.

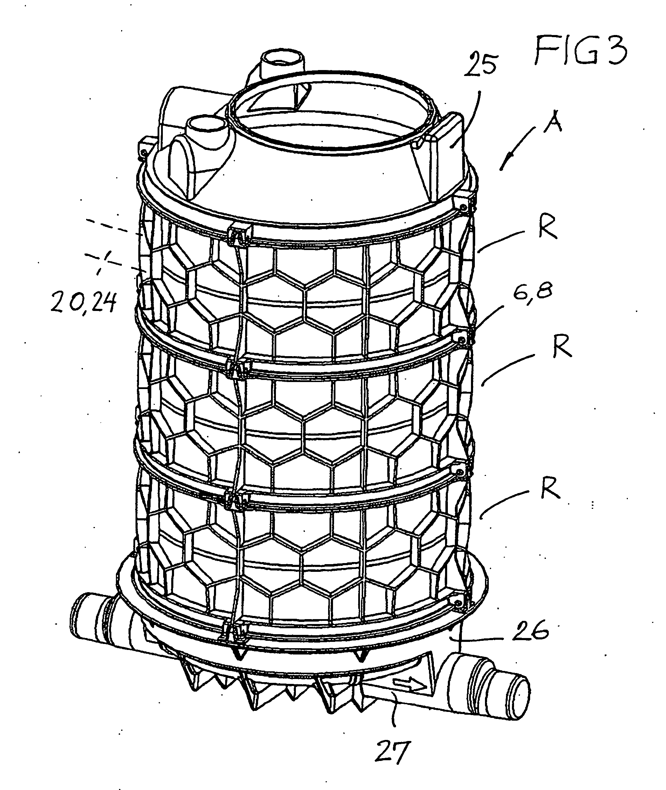

In Fig. 3 ist ein aus drei aufeinandergesetzten, leicht nach außen bombierter Schachtringen R gebildeter Schacht A für die Abwassertechnik gezeigt. Auf dem obersten Schachtring R ist ein Aufsatzteil 25 montiert, während unter dem untersten Schacht R ein Gerinne 26 mit einem Rohrstrang 27 installieret ist. Die Schachtringe R sind mit dem Aufsatzteil 25, mit dem Gerinne 26 und untereinander jeweils durch die Kupplungselemente 6, 8 verbunden. In der linken Seite im obersten Schachtring R ist beispielsweise das dort zu installierende Rohr 20, 24 gestrichelt angedeutet. Gegebenenfalls sind auch die Ringwände leicht bombiert.

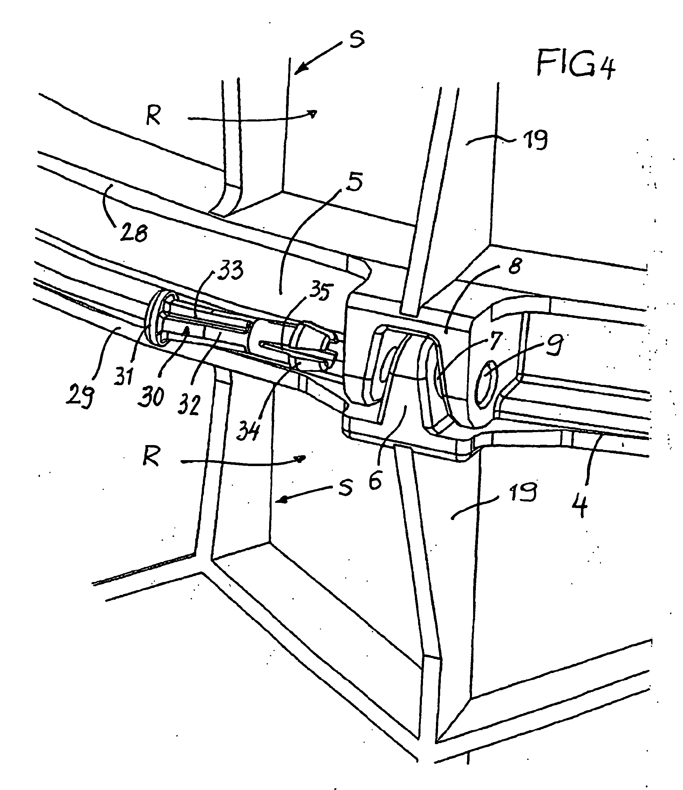

Fig. 4 verdeutlicht die Kupplungsweise der Schachtringe R mittels der Kupplungselemente 6, 8. Und zwar tritt beim Zusammenfügen der Verbindungsbereiche 4, 5 unter Zwischenlage wenigstens eines Dichtungselementes die Keilnase des Kupplungselementes 6 in den Keilnasen-Aufnahmebock des Kupplungselementes 8 so ein, dass die Durchgangsöffnungen 7, 9 im Wesentlichen aufeinander ausgerichtet sind. Dann wird ein Kerbstift 30 eingetrieben, der einen Anzug erzeugt und die Halterung bestimmt. Der Kerbstift 30 besitzt einen Eintreibkopf 31, an dem sich ein Schaftabschnitt 32 mit Längsnuten 33 anschließt. Am Schaftende ist ein konischer Kopf 34 geformt, der durch in Umfangsrichtung verteilte Längsnuten 35 unterteilt und damit flexibel ist. Der Kerbstift 30 wird eingetrieben, bis der Hals hinter dem konischen Kopf 34 mit Anzug in der Durchgangsöffnung 9 sitzt.

## Patentansprüche

1. Schachtring (R) aus Kunststoff, insbesondere zum Abwasser- oder Kabeltechnik-Erdeinbau, mit einer im Wesentlichen zylindrischen oder konischen Ringwand (1), die an den zueinander parallelen Ringenden (2, 3) Verbindungsbereiche (4, 5) und zumindest außenseitig eine Wabenstruktur (S) definierende, im Wesentlichen radial zur Ringachse orientierte Versteifungsrippen (10) und zwischen Versteifungsrippen in Lage und Größe wählbare Rohranschlussbereiche (15, 16, 17) aufweist, **dadurch gekennzeichnet daß** die Wabenstruktur(s) eine regelmäßige Sechseck-Wabenstruktur (S) bildet innerhalb derer der jeweilige Rohranschlussbereich (15, 16, 17) von jeweils einer vollständigen Sechseck-Wabe (11) oder einer Sechseck-Teilwabe (13) umfasst und ein in die Sechseck-Wabe (11) oder die Sechseck-Teilwabe (13) mit Abstand von den Versteifungsrippen (10) eingeschriebener Kreis ist, wobei ein runder Durchgang in einem Rohranschlussbereich (15,16,17) eingeschnitten ist.

2. Schachtring nach Anspruch 1, **dadurch gekennzeichnet, dass** die Wabenstruktur (S) zumindest eine in Umfangsrichtung durchgehende Reihe vollständiger Waben (11) enthält, vorzugsweise eine zu den Ringenden (2, 3) parallele Reihe, und dass zwischen dem jeweiligen Verbindungsbereich (4, 5) und der Reihe nur Teilwaben (13) vorgesehen sind.

3. Schachtring nach Anspruch 1, **dadurch gekennzeichnet, dass** in Umfangsrichtung verteilt mehrere zu den Ringenden (2, 3) senkrechte, zwischen den Verbindungsbereichen (4, 5) gerade durchgehende Versteifungsrippen (19) vorgesehen sind, in deren Verlauf Wabenstreben (12) von Sechseck-Waben (11) enthalten sind, und die Sechseck-Teilwaben (13) durchsetzen.

4. Schachtring nach Anspruch 3, **dadurch gekennzeichnet, dass** die durchgehenden Versteifungsrippen (19) auf Kupplungselemente (6, 8) in den Verbindungsbereichen (4, 5) ausgerichtet, vorzugsweise mit diesen verbunden, sind.

5. Schachtring nach Anspruch 1, **dadurch gekennzeichnet, dass** zumindest die Versteifungsrippen (10) in der Wabenstruktur (S) in einer Seitenansicht des Schachtrings (R) nach außen bombiert verlaufen, insbesondere mit einer von jedem Ringende (2, 3) bis etwa zur Außentaille allmählich zunehmenden Höhe (4).

6. SchachVing nach Anspruch 3, **dadurch gekennzeichnet, dass** die Höhe der durchgehenden Rippen Versteifungsrippen (19) zu den Verbindungsbereichen (4, 5) hin zunimmt.

7. Schachtring nach Anspruch 1, **dadurch gekennzeichnet, dass** die Ringwand (1) in zumindest einer Sechseck-Wabe (11) bzw. Sechseck-Teilwabe (13) eine eingeformte Flachstelle (18) für einen Anschlussbereich (17) aufweist.

8. Schachtring nach wenigstens einem der vorhergehenden Ansprüche, **dadurch gekennzeichnet, dass** in einem Anschlussbereich (15, 16) in einem runden Durchgang ein Rohr (24) über eine eingeknüpfte Elastomerdichtung (23) gehaltert ist.

9. Schachtring nach Anspruch 7, **dadurch gekennzeichnet, dass** in dem in der Flachstelle (18) ausgebildeten Anschlussbereich (17) in einem runden Durchgang ein Rohr (20) über eine Schraubhalterung (21) mit Dichtung gehaltert ist.

10. Schachtring nach Anspruch 1, **dadurch gekennzeichnet, dass** die lichte Wabenweite (W) etwa 15 % bis 30 % des Ringdurchmessers (D) beträgt.

11. Schachtring nach Anspruch 4, **dadurch gekennzeichnet, dass** die Kupplungselemente (6, 8) im Wesentlichen zu den Ringenden (2, 3) senkrecht eingeformte Keilnasen und Keilnasen-Aufnahmeböcke jeweils mit im Wesentlichen zu den Ringenden parallelen Durchstecklöchern (7, 9) für einen Kerbspannstift (30) sind.

12. Schachtring nach wenigstens einem der vorhergehenden Ansprüche, **dadurch gekennzeichnet, dass** der Schachtring (R) ein Spritzguss- oder Rotationsgussteil aus HDPE oder PP ist.

## Claims

1. Manhole ring (R) made of plastics, particularly for underground sewage pipe or cable installation, having a substantially cylindrical or conical ring wall (1) which comprises connecting regions (4, 5) at the ring ends (2, 3) that are parallel to one another, and at least on the outside comprises reinforcing ribs (10) that define a honeycomb structure (S) and are oriented substantially radially to the ring axis and, between the reinforcing ribs, pipe connecting regions (15, 16, 17) of selectable position and size, **characterised in that** the honeycomb structure (S) forms a regular hexagonal honeycomb structure (S) within which the respective pipe connecting region (15, 16, 17) of a complete hexagonal honeycomb (11) or a partial hexagonal honeycomb (13) is contained and a circle is inscribed into the hexagonal honeycomb (11) or partial hexagonal honeycomb (13) at a spacing from the reinforcing ribs (10), a round access being incised in a pipe connecting region (15, 16, 17).

2. Manhole ring according to claim 1, **characterised in that** the honeycomb structure (S) contains at least one row of complete honeycombs (11) extending in the circumferential direction, preferably a row that is parallel to the ring ends (2, 3), and **in that** only partial honeycombs (13) are provided between the respective connecting region (4, 5) and the row.

3. Manhole ring according to claim 1, **characterised in that** a plurality of reinforcing ribs (19) are provided which are distributed in the circumferential direction, perpendicular to the ring ends (2, 3) and extending in a straight line between the connecting regions (4, 5), the extent of which encompasses the honeycomb walls (12) of hexagonal honeycombs (11) and which pass through the partial hexagonal honeycombs (13).

4. Manhole ring according to claim 3, **characterised in that** the extending reinforcing ribs (19) are aligned with coupling elements (6, 8) in the connecting regions (4, 5), preferably connected thereto.

5. Manhole ring according to claim 1, **characterised in that** at least the reinforcing ribs (10) in the honeycomb structure (S) extend in an outwardly convex shape, when the manhole ring (R) is viewed in side elevation, in particular with a height (4) that gradually increases from each ring end (2, 3) until it reaches approximately the external size.

6. Manhole ring according to claim 3, **characterised in that** the height of the reinforcing ribs (19) increases towards the connecting regions (4, 5).

7. Manhole ring according to claim 1, **characterised in that** the ring wall (1) comprises, in at least one hexagonal honeycomb (11) or partial hexagonal honeycomb (13), a flat area (18) formed therein for a connecting region (17).

8. Manhole ring according to at least one of the preceding claims, **characterised in that** a pipe (24) is held in a connecting region (15, 16) in a round passage by means of an elastomeric seal (23) secured therein by tying.

9. Manhole ring according to claim 7, **characterised in that** in the connecting region (17) formed in the flat area (18) in a round passage a pipe (20) is held by means of a screw-type holder (21) with gasket.

10. Manhole ring according to claim 1, **characterised in that** the internal width (W) of the honeycomb is approximately 15% to 30% of the ring diameter (D).

11. Manhole ring according to claim 4, **characterised in that** the coupling elements (6, 8) are wedge projections and wedge projection receiving blocks formed substantially perpendicularly to the ring ends (2, 3), each having through-holes (7, 9) substantially parallel to the ring ends for a splined clamping pin (30).

12. Manhole ring according to at least one of the preceding claims, **characterised in that** the manhole ring (R) is an injection-moulded or rotary-moulded part made of HDPE or PP.

## Revendications

1. Anneau de puits (R) en matière plastique, en particulier à monter dans la terre pour les eaux usées ou le câblage, avec une paroi annulaire (1) globalement cylindrique ou conique qui présente sur les extrémités d'anneau parallèles (2, 3) des zones de liaison (4, 5), des nervures de renforcement (10) qui définissent au moins sur le côté extérieur une structure alvéolée (S) et qui sont orientées globalement radialement par rapport à l'axe d'anneau, et, entre les nervures de renforcement, des zones de raccordement de tuyau (15, 16, 17) dont la position et la taille peuvent être choisies, **caractérisé en ce que** la structure alvéolée (S) forme une structure régulière à alvéoles hexagonaux (S) à l'intérieur de laquelle la zone de raccordement de tuyau correspondante (15, 16, 17) est entourée par un alvéole hexagonal complet (11) ou par un alvéole hexagonal partiel (13) et est constituée par un cercle inscrit dans l'alvéole hexagonal (11) ou l'alvéole hexagonal partiel (13) à une certaine distance des nervures de renforcement (10), un passage rond étant découpé dans une zone de raccordement de tuyau (15, 16, 17).

2. Anneau de puits selon la revendication 1, **caractérisé en ce que** la structure alvéolée (S) contient au moins une rangée continue, dans le sens circonférentiel, d'alvéoles complets (11), de préférence une rangée parallèle aux extrémités d'anneau (2, 3), et **en ce qu'**il n'est prévu, entre la zone de liaison (4, 5) et ladite rangée, que des alvéoles partiels (13).

3. Anneau de puits selon la revendication 1, **caractérisé en ce qu'**il est prévu, réparties dans le sens circonférentiel, plusieurs nervures de renforcement (19) qui sont perpendiculaires aux extrémités d'anneau (2, 3), qui sont continues en ligne droite entre les zones de liaison (4, 5), dans la trajectoire desquelles sont contenus les côtés (12) des alvéoles hexagonaux (11) et qui traversent les alvéoles hexagonaux partiels (13).

4. Anneau de puits selon la revendication 3, **caractérisé en ce que** les nervures de renforcement continues (19) sont alignées sur des éléments d'accouplement (6, 8) dans les zones de liaison (4, 5) et sont de préférence reliées à ceux-ci.

5. Anneau de puits selon la revendication 1, **caractérisé en ce qu'**au moins les nervures de renforcement (10) dans la structure alvéolée (S) sont bombées vers l'extérieur, sur une vue latérale de l'anneau de puits (R), en particulier avec une hauteur qui va en augmentant progressivement de chaque extrémité d'anneau (2, 3) à peu près jusqu'à la partie extérieure centrale axialement.

6. Anneau de puits selon la revendication 3, **caractérisé en ce que** la hauteur des nervures de renforcement continues (19) va en augmentant vers les zones de liaison (4, 5).

7. Anneau de puits selon la revendication 1, **caractérisé en ce que** la paroi annulaire (1) présente dans au moins un alvéole hexagonal (11) ou un alvéole hexagonal partiel (13) un endroit plat intégré (18) pour une zone de raccordement (17).

8. Anneau de puits selon l'une au moins des revendications précédentes, **caractérisé en ce qu'**un tuyau (24) est fixé dans une zone de raccordement (15, 16) dans un passage rond, par l'intermédiaire d'un joint d'étanchéité élastomère rattaché (23).

9. Anneau de puits selon la revendication 7, **caractérisé en ce que** dans la zone de raccordement (17) formée dans l'endroit plat (18), un tuyau (20) est fixé dans un passage rond par l'intermédiaire d'une fixation à vis (21) avec un joint d'étanchéité.

10. Anneau de puits selon la revendication 1, **caractérisé en ce que** l'ouverture d'alvéole (W) représente environ 15% à 30% du diamètre d'anneau (D).

11. Anneau de puits selon la revendication 4, **caractérisé en ce que** les éléments d'accouplement (6, 8) sont constitués par des saillies de clavetage intégrées globalement perpendiculairement aux extrémités d'anneau (2, 3) et par des supports de saillie de clavetage avec des trous de passage (7, 9) globalement parallèles aux extrémités d'anneau, pour une goupille de serrage cannelée (30).

12. Anneau de puits selon l'une au moins des revendications précédentes, **caractérisé en ce que** l'anneau de puits (R) est une pièce moulée par injection ou par rotation en HDPE ou PP.
